# EUROPEAN PATENT APPLICATION

(11) **EP 2 988 046 A1**
(43) Date of publication of application: **24.02.2016**
(21) Application number: 15182064.4
(22) Date of filing: 21.08.2015
(51) Int. Cl.: F16L 21/00, F16L 25/14

(54) **IMPROVEMENTS IN OR RELATING TO PIPE COUPLINGS**

(30) Priority: 22.08.2014 GB 201414958
(71) Applicant: Flex-Seal Couplings Limited, Barnsley, South Yorkshire S73 0UW (GB)
(72) Inventor: Riding, Stephen Keith, Barnsley, south yorkshire S73 0UW (GB); Milnes, David, Barnsley, South Yorkshire S73 0UW (GB)
(74) Representative: Wilson Gunn

(57) **Abstract**

A pipe coupling 10 comprises an elastomeric sleeve 20 adapted to fit over the exterior ends of two pipe sections (not shown). To retain the coupling in position, a pair of adjustable clamping bands 30a, 30b are provided. A support sleeve 100 is provided between the elastomeric sleeve 20 and the bands 30a, 30b. The sleeve 100 comprises a tube having a compensation section 110 and contact sections 120a, 120b at either end. The contact sections are each provided with a series of pairs of aligned axial slots 121 extending from the edge of each contact section 120a, 120b. The contact sections 120a, 120b have differing axial extents and the respective clamping bands 30a, 30b are of correspondingly different widths. The use of differing contact sections 120a, 120b increases resistance to shear forces when compared with a symmetrical arrangement. The blind ends of the pairs of aligned axial slots 121 are connected by corresponding axial webs 111 extending therebetween. The compensation section 110 is adapted to flex in relation to the contact sections 120a, 120b by the provision of circumferential grooves 119. This helps compensate for a difference in the diameter of the coupled pipes. The support sleeve 100 may be formed from a number of ring segments 150.

## Description

### Technical Field of the Invention

The present invention relates to improvements in or relating to pipe couplings and particularly in or relating to pipe couplings adapted to connect together pipes having different exterior diameters. Most particularly, the invention relates to an adjustable support sleeve for use in coupling together pipes of different external diameters and to a pipe coupling incorporating such a sleeve.

### Background to the Invention

It is often necessary or desirable to couple pipe sections together. If each pipe section has the same diameter or a similar diameter, this can be readily achieved by use of a standard pipe coupling. Such a coupling typically comprises a tube of resiliently deformable material adapted to fit around the outer diameter of each pipe section and bridge the gap therebetween. Typically a clamping band can be provided around each end portion of the coupling. When tightened, the clamping band compresses the coupling against the pipe section thereby securing the coupling to the pipe section and forming a seal. Another common feature is the provision of a shear band to increase resistance to load and shear forces.

Commonly, the two pipe sections have different outer diameters. If this size difference is relatively small, the clamping bands can ensure a reasonably secure seal between the coupling and both pipe sections. If, however, this size difference is relatively large, it may not be possible to form a secure seal by further tightening the clamping bands around the smaller pipe section.

One possible solution is to provide a 'bush' around the end of the smaller pipe section. A bush comprises a strip of resilient material which may be wrapped around the outer diameter of the smaller pipe section. The thickness of the bush is sufficient to enable a coupling which fits the larger pipe section to form a secure seal on the outer surface of the bush. If the bush is tightly applied to the smaller pipe section, this will thereby enable a secure seal between the coupling and the smaller pipe section to be provided.

With such an arrangement, as the difference in external pipe diameter increases, it is more difficult to provide adequate support from a simple conventional shear band. As such, pipe couplings have been developed wherein an adjustable support sleeve is provided around the elastomeric sleeve. The support sleeve typically comprises a substantially tube like form with a central section adapted to provide shear support and contact sections at each end. The contact sections fit between the elastomeric sleeve and the clamping bands and are adapted by the provision of slots or otherwise to adjust to different pipe diameters.

A particular example of a support sleeve is disclosed in US 4,186,948. This document describes a support sleeve comprising a plurality of plates whereby each plate partially overlaps one neighbouring plate and partially underlies another neighbouring plate and the neighbouring plates are pivotably connected. In one embodiment a plurality of plates are formed from a continuous strip of material, joined at the ends to form a tube. Axial slits are provided to define separate plates. Further internal slits at the end of each axial slit allow an upraised hinge channel to be formed defining the boundary between adjacent plates and allowing overlap in the region of the lateral slits. In this manner, the plate edges between the axial slits provide contact sections which can be overlain by clamping bands. The overlapping edges of the plates enable the contact portions to accommodate different pipe diameters. Additionally, folding of the internal slits to create the channel portions allows the sleeve to flex along a line joining the ends of the channel portions so as to accommodate couplings of different diameter pipes. Whilst this design is relatively effective, it is difficult to manufacture. Furthermore, the slitting and folding necessary in manufacture can weaken the overall structure.

Another example of a support sleeve is disclosed in US 4,380,348. This document describes a support sleeve comprising a raised central section having sloped edges. Projecting from the sloped edges are lateral contact sections, each lateral contact section having a plurality of axial slits extending to the central section. The provision of the lateral slits enables each contact section to accommodate different pipe diameters, whilst flexing at the sloped edges of the central section enables the central section to accommodate different pipe diameters. Whilst this does provide for more straight forward manufacture than the support sleeve shown in US 4,186,948, there is limited flexibility of the central section and thus there is a limited difference in pipe diameter that can be accommodated.

A further example of a support sleeve is disclosed in EP2072877. This document describes a support sleeve wherein axial slots in the lateral sections are extended into the central section. In this manner, rather than merely flexing at either edge to accommodate different diameter pipes, the central section can expand or contract circumferentially. Whilst this does provide for good performance in accommodating different pipe diameters, extending the slots into the central section necessarily weakens the central section, potentially reducing resistance to shear forces. This can be problematic in view of the change of shape of the central section, which does not readily permit the use of an additional shear band in order to improve support. In order to address these issues, EP2072877 does show that some of the axial slots in the lateral portions are closed at outer edges of the lateral portion. This can help improve the structural stability of the support sleeve as a whole, at the expense of flexibility in accommodating a larger range of pipe diameters.

It is therefore an object of the present invention to provide a new support sleeve for pipe couplings that at least partially overcomes or alleviates the above problems.

### Summary of the Invention

According to a first aspect of the present invention there is provided a support sleeve for a pipe coupling adapted to connect pipes of different exterior diameters, the support sleeve comprising: a tube having contact sections at either end and a compensation section therebetween wherein the exterior of each contact section is adapted to receive an adjustable clamping band, and wherein the tube is provided with a plurality of aligned pairs of axial slots extending from opposing ends of the tube, and the tube is provided with a plurality of axial webs extending between the blind ends of each pair of aligned axial slots.

In this manner there is provided a support sleeve for a pipe coupling that is readily adjustable, is relatively simple to manufacture and may be readily fitted with a shear band to improve the stability of coupled pipe under a shear force loading.

The webs may have any suitable cross-sectional profile. In particular, the webs may have a U or V shaped cross-sectional profile. The webs may have any suitable linear profile. In a preferred embodiment, the webs have a substantially constant linear profile. In an alternative embodiment, the webs may have a substantially asymmetric linear profile whereby the web is wider at one end than at the other. The asymmetric linear profile may have a substantially V shaped form whereby the web profile increases in width from one end of the web to the other, or, the asymmetric linear profile may have a substantially Y shaped form whereby the web has a constant width from one end of the web to a transition point and then increases in width from the transition point to the other end of the web. The use of an asymmetric linear web profile increases resistance to shear forces as compared with a symmetrical support sleeve.

In some embodiments, the contact sections may have substantially equal axial extent. In a preferred embodiment, one contact section has a substantially greater axial extent than the other contact section. In such cases, the shear bands associated with each contact section may be of differing widths adapted to the axial extent of each contact section. The use of contact sections of differing widths and associated clamping bands of corresponding differing widths increases resistance to shear forces provided by the support sleeve as compared with a support sleeve having identical contact sections and clamping bands.

The sleeve may be adapted to flex along the boundaries between the contact sections and the compensation section. This may be achieved by the provision of one or more circumferential grooves along the boundaries of the compensation section.

In some embodiments, an additional central section may be provided between the compensation section and one of the contact sections. The central section may be adapted to retain a shear band around its midpoint or in a position offset towards one end. The use of an offset shear band increases resistance to shear forces provided by the support sleeve as compared with a support sleeve having a shear band around its midpoint. The shear band may be retained in an offset position by one or more retaining ridges projecting from the exterior surface of the support sleeve. The sleeve may be adapted to flex along the boundary between the compensation section and the central section. This may be achieved by the provision of one or more circumferential grooves along the boundary between the central section and the compensation section

The support sleeve may be provided with axial ribs projecting from its interior surface or its exterior surface. The axial ribs improve the resistance to shear forces provided by the support sleeve. Where the axial ribs project from the interior surface they can additionally provide for improved grip between the support sleeve and an underlying elastomeric sleeve. Where the axial ribs project from the interior surface they can additionally provide for a relatively even loading of the force applied by external clamping and shear bands.. In a preferred arrangement, separate axial ribs are provided on each contact section. In a preferred arrangement where a central section is provided, separate axial ribs are provided on the central section to those provided on the contact sections. The respective ribs may be aligned with one another in some embodiments.

The support sleeve may be formed from one or more ring segments connected together. Such a modular formation simplifies manufacture, transport and storage of the support sleeves. It also provides for using different numbers of segments to form a support sleeve where appropriate. The ring segments may each comprise: contact sections at either end with a compensation section therebetween wherein the exterior of each contact section is adapted to receive an adjustable clamping band, and wherein the segments are each provided with a plurality of aligned pairs of axial slots extending from opposing ends, and each segment is provided with a plurality of axial webs extending between the blind ends of each pair of aligned axial slots.

Preferably, each ring segment is provided with connection means to enable such connection. In a preferred embodiment, the connection means comprise a male snap fitting element at one edge of the ring segment and a female snap fitting element at the other edge of the ring segment. In embodiments provided with axial ribs, the connection elements may be provided on or integral with axial ribs. In a particularly preferred embodiment, some or all of the axial ribs may be provided with one or more openings for receiving a male snap fitting element. In such embodiments, an additional axial rib may be provided at one end of the ring segment. This arrangement allows segments to be connected together edge to edge to form a support sleeve. It also allows some segments to be reduced in size by slicing along the webs and still be connected to the adjoining segment. This provides for increased flexibility in adjusting the support sleeve to a desired size.

The support sleeve may be adapted to flex along the boundaries between the contact sections and the compensation section. This can be achieved by providing one or more circumferential grooves at these locations. Additionally or alternatively, the contact sections may be connected to the compensation section via a series of webs.

The contact sections may comprise a circumferential channel on the exterior surface of the support sleeve. The channel can enable the clamping bands to be retained in position. The contact sections may also be provided with griping means at their distal ends. The gripping means may comprise a ridge adapted to abut and retain the edge of an elastomeric sleeve.

The support sleeve may be formed from any suitable material. In particular, the support sleeve may be formed from: a plastic material such as Nylon, HDPE (high density polyethylene), PPCO (polypropylene copolymer), PVC (polyvinylchloride) or the like: a metal or alloy such as zinc, aluminium, steel or similar; or a combination of materials. In particular, the support sleeve may be formed from a combination of plastic materials using a dual material manufacturing process; or from aa combination of plastic and metal using a plastic to metal moulding process.

The support sleeve is preferably adapted to fit around an elastomeric sleeve. The elastomeric sleeve may be formed from any suitable material including but not limited to: EPDM (ethylene propylene diene monomer), Silicone, PVC (polyvinylchloride), polyurethane, NBR (nitrile butadiene rubber)e, SBR (styrene butadiene rubber), Butyl Rubber or the like.

The support sleeve may be adapted to be fitted with suitable adjustable clamping bands or adjustable shear bands. Most preferably the clamping bands and shear bands are formed from a metal such as steel, aluminium or the like. In alternative embodiments, the bands may be formed from suitable plastic materials. The adjustment means for adjusting the bands may take any suitable form. In one preferred embodiment, the adjustment means comprises a worm screw operable to engage with grooves or slots on the band.

According to a second aspect of the present invention there is provided a pipe coupling adapted to connect pipes of different exterior diameters, the pipe coupling comprising an elastomeric sleeve; a support sleeve according to the first aspect of the present invention and two or more adjustable clamping bands.

According to a third aspect of the present invention there is provided a ring segment suitable for connection together with one or more like ring segments to form a support sleeve according to the first aspect of the present invention, the ring segment comprising: contact sections at either end with a compensation section therebetween wherein the exterior of each contact section is adapted to receive an adjustable clamping band, and wherein the ring segment is provided with a plurality of aligned pairs of axial slots extending from opposing ends, and the segment is provided with a plurality of axial webs extending between the blind ends of each pair of aligned axial slots.

The coupling of the second aspect of the present invention and the ring segment of the third aspect of the present invention may each incorporate any or all of the features described in relation to the support sleeve of the first aspect of the present invention, as desired or as appropriate.

### Detailed Description of the Invention

In order that the invention may be more clearly understood embodiments thereof will now be described, by way of example only, with reference to the accompanying drawings, of which:
- Figure 1: shows a pipe coupling according to the present invention incorporating a support sleeve according to the present invention;
- Figure 2: shows a support sleeve for a pipe coupling according to the present invention;
- Figure 3a: shows a schematic cross-sectional view of the support sleeve of figure 2 in a flexed position;
- Figure 3b: shows a schematic cross-sectional view of the support sleeve of figure 2 in an unflexed position;
- Figure 4: shows an exterior view of a ring segment according to the present invention for forming a support sleeve according to the present invention;
- Figure 5: shows an interior view of a ring segment according to the present invention for forming a support sleeve according to the present invention;
- Figure 6: shows a pipe coupling according to the present invention incorporating a support sleeve according to the present invention;
- Figure 7: shows a support sleeve for a pipe coupling according to the present invention;
- Figure 8a: shows a schematic cross-sectional view of the support sleeve of figure 7 in a flexed position;
- Figure 8b: shows a schematic cross-sectional view of the support sleeve of figure 7 in an unflexed position;
- Figure 9: shows an exterior view of a ring segment according to the present invention for forming a support sleeve according to the present invention; and
- Figure 10: shows an interior view of a ring segment according to the present invention for forming a support sleeve according to the present invention.

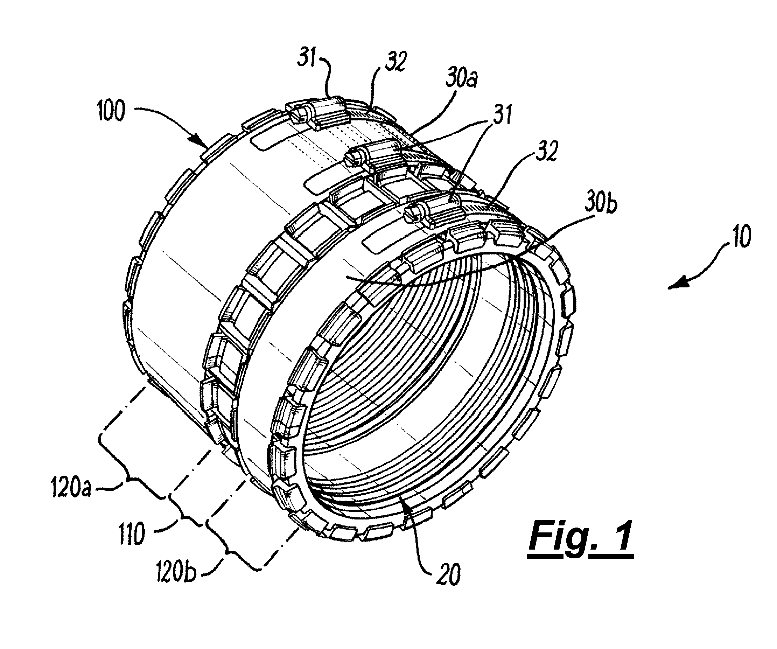

Turning now to figure 1, a pipe coupling 10 comprises an elastomeric sleeve 20 adapted to fit over the exterior ends of two pipe sections (not shown) that are to be coupled together. In order to retain the coupling in position, a pair of adjustable clamping bands 30a, 30b are provided. The clamping bands 30a, 30b can be adjusted using worm screw arrangements 31 which engage with grooves or slots 32 in the bands 30a, 30b. For further structural stability, particularly when coupling together pipes with different exterior diameters, a support sleeve 100 is provided between the elastomeric sleeve 20 and the bands 30a, 30b.

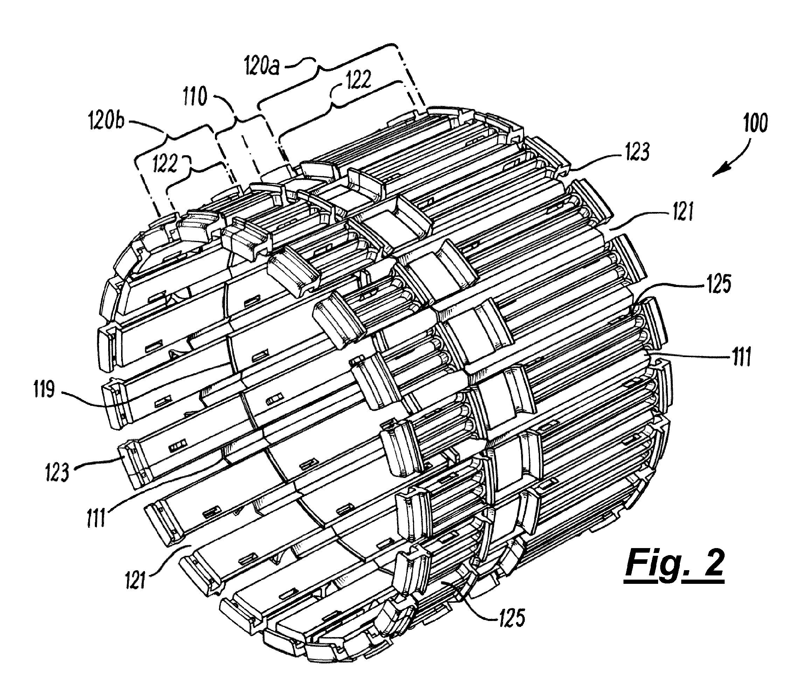

Turning to figure 2, the support sleeve 100 is shown without elastomeric sleeve 20 and bands 30a, 30b. The sleeve 100 comprises a tube having a compensation section 110 and contact sections 120a, 120b at either end. The contact sections are each provided with a series of pairs of aligned axial slots 121 extending from the edge of each contact section 120a, 120b.

The contact sections are adapted to retain the clamping bands 30a, 30b by the provision of a circumferential channel 122 on the exterior surface. The channel 122 is adapted to have a width corresponding to the clamping band 30a, 30b. The ends of the contact sections 120a, 120b are provided with gripping means 123 adapted to engage with and retain the edge of the elastomeric sleeve 20. This can help ensure that the support sleeve 100 remains in position relative to the elastomeric sleeve 20 as the clamping bands 30a, 30b are tightened.

The contact sections 120a, 120b have differing axial extents. The respective clamping bands 30a, 30b for each contact section 120a, 120b are of correspondingly different widths. The use of differing contact sections 120a, 120b increases resistance to shear forces when compared with a symmetrical arrangement. Whilst there may be concerns that an asymmetrical coupling is less flexible in its potential use, in reality, if two pipes do have different outer diameters, then any adjustable coupling will be adjusted into an asymmetrical form to complete the coupling process.

The blind ends of the pairs of aligned axial slots 121 are connected by corresponding axial webs 111 extending therebetween. The webs 111 have a substantially V shaped cross-sectional profile and a substantially constant linear profile

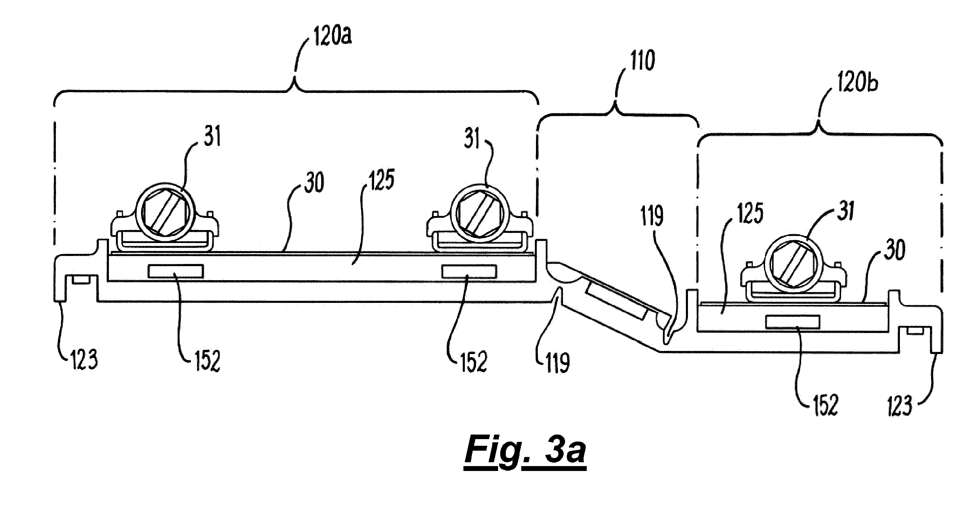

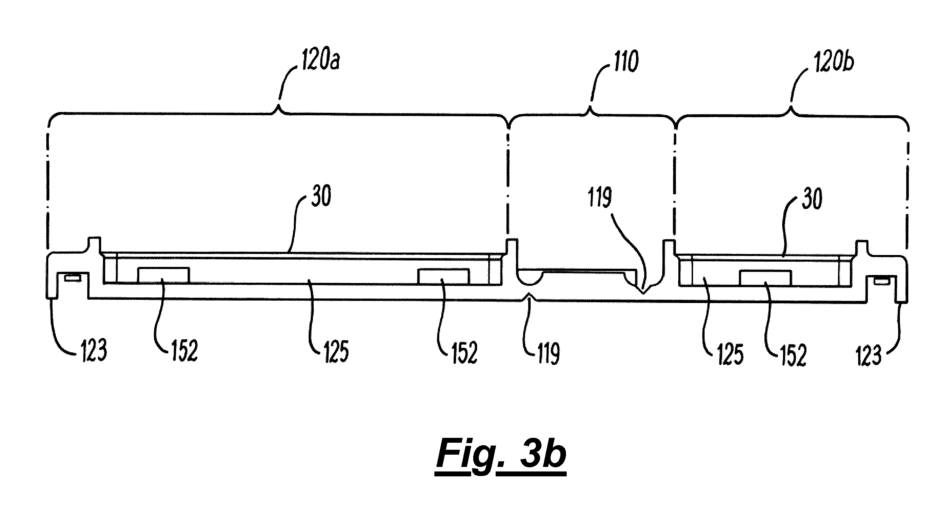

The compensation section 110 is adapted to flex in relation to the contact sections 120a, 120b. this is achiebved by the provision of circumferential grooves 119. The grooves 119 enables the compensation section 110 to flex along its boundaries with the contact sections 120a, 120b. This helps compensate for a difference in the diameter of the coupled pipes and is illustrated schematically at figure 3. In this context, figure 3b shows the sleeve 100 in an unflexed position whilst figure 3a illustrates how the sleeve 100 may flex to accommodate different pipe diameters.

The exterior surface of the support sleeve 100 is provided with projecting axial ribs 125,. The axial ribs 125, provide for improved grip between the support sleeve 100 and the clamping bands 30a, 30b. The axial ribs 125can additionally provide for a relatively even loading of the force applied by the clamping bands 30a, 30b.

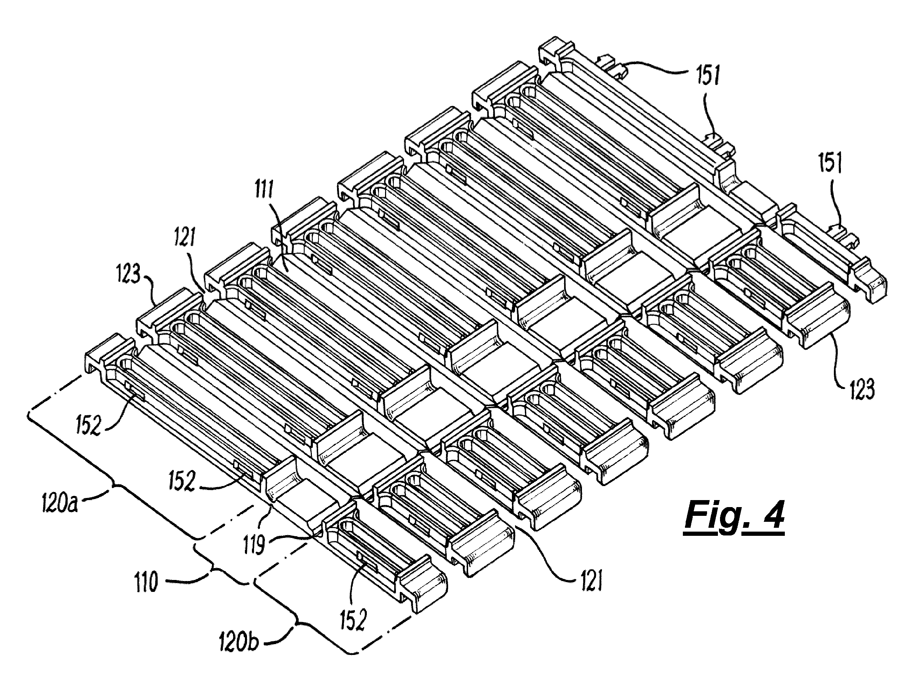

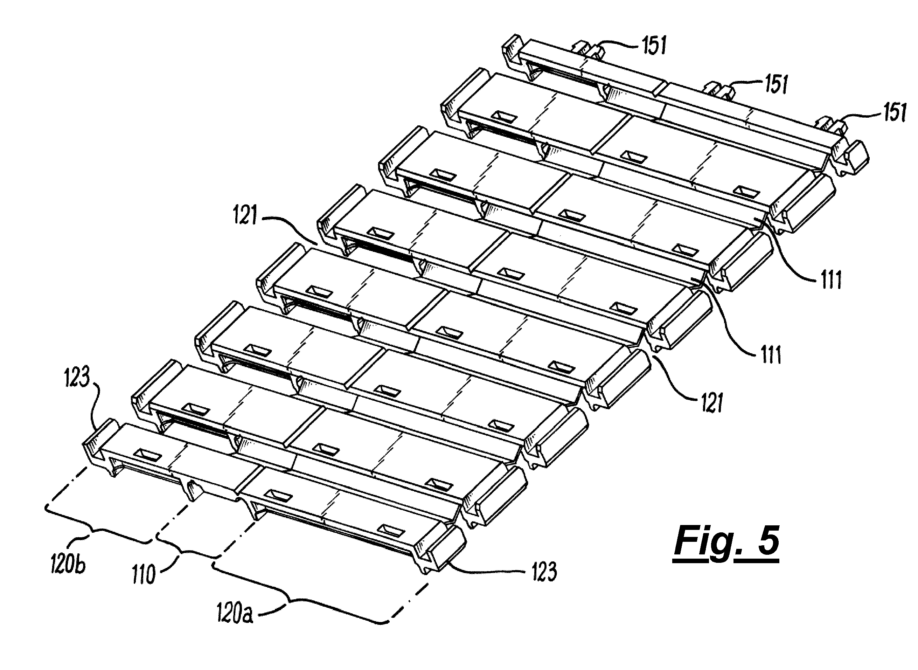

The support sleeve 100 of figures 1-3 is formed from a number of ring segments 150 shown in figures 4 & 5. The ring segments 150 are connected together via snap fitting elements 151 which are adapted to be inserted into and form a snap fit with openings 152 in some of the ribs 125. If the ribs 125 are omitted from the design, it is possible for an alternative snap fitting arrangement or for an alternative connection means to be provided, such as thermal welding, adhesive or solvent bonding. In the present case, it is advantageous for the openings 152 to be provided in the ribs 125 at this makes it possible for the ring segments to be cut to a desired size along webs 111. In this manner, the circumference of the support sleeve 100 can be selected to maximise performance before fitting to a pipe.

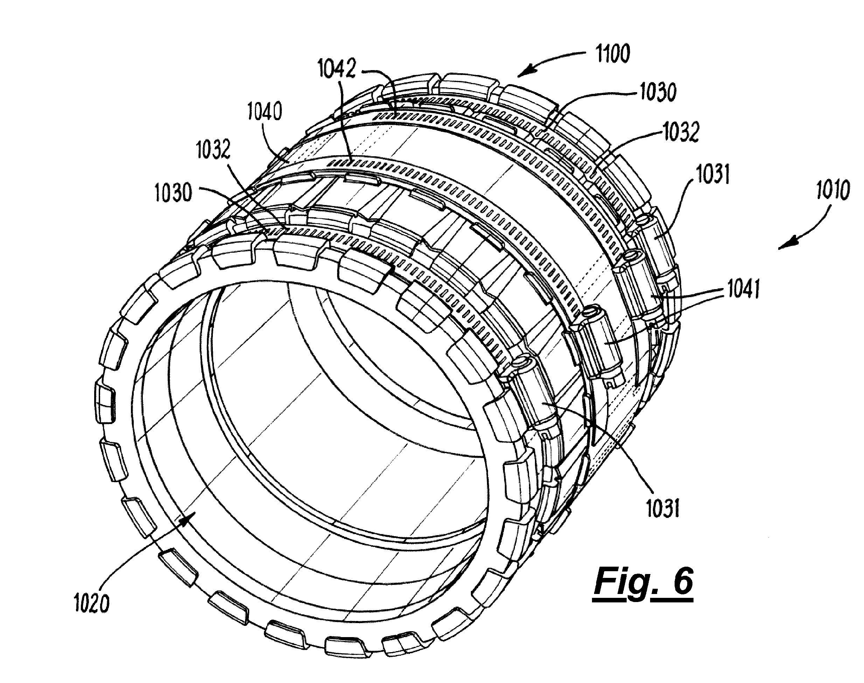

Turning now to figure 6, an alternative embodiment of a pipe coupling 1010 is shown. In this context, the coupling still comprises an elastomeric sleeve 1020 retained in position by a pair of like adjustable clamping bands 1030 provided over a support sleeve 1100. The clamping bands can be adjusted using worm screw arrangements 1031 which engage with grooves or slots 1032 in the bands 1030. In this embodiment additional support against shear forces is provided by adjustable shear band 1040. As with the clamping bands 1030, the shear band 1040 is adjusted by using a worm screw arrangement 1041 which engages with grooves or slots 1042 in the band 1040.

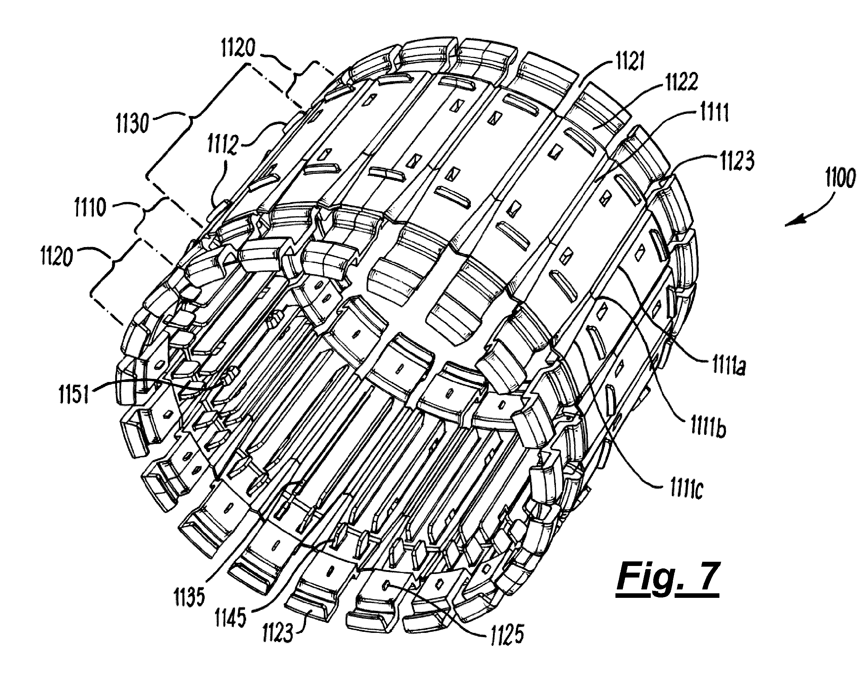

Turning to figure 7, the support sleeve 1100 is shown without elastomeric sleeve 1020 and bands 1030, 1040. The sleeve 1100 differs from the sleeve 100 of figures 1-5 by having substantially equal contact sections 1120 and additionally comprising a central section 1130 provided between one of the contact sections and the compensation section 1110.

The contact sections are adapted to retain the clamping bands 1030 by the provision of a circumferential channel 1122 on the exterior surface and the ends of the contact sections 1120 are provided with gripping means 1123 adapted to engage with and retain the edge of the elastomeric sleeve 1020.

As in the embodiment of figures 1-5, the contact sections 120 are each provided with a series of pairs of aligned axial slots 1121 extending from the distal edge of each contact section 1120, the blind ends of the aligned slots 1121 being connected by axial webs 1111. In this embodiment, the webs 1111 have a substantially V shaped cross-sectional profile and an asymmetric linear profile whereby the web 1111 is wider at one end than at the other. In particular, the webs 1111 have a substantially Y shaped linear profile. In this manner a first section of the web 1111a has a constant width from one end of the web to a transition point 1111b. After the transition point 1111b, the remaining section of the web 1111c increases in width to the other end of the web 1111. The asymmetric linear profile increases the resistance to shear forces of the web 1111 when compared with a symmetrical web.

The additional central section 1130 is adapted to retain the shear band 1040 in a desired position by the provision of retaining ridges 1112. As can be seen, the ridges 1112 are offset in respect of the central section 1130. As such, the shear band 1040 is offset with respect to the central section 1130. The use of an offset shear band 1040 can increase the range of adjustment that can be provided by the support sleeve 1100 as compared with a support sleeve having a shear band around its midpoint.

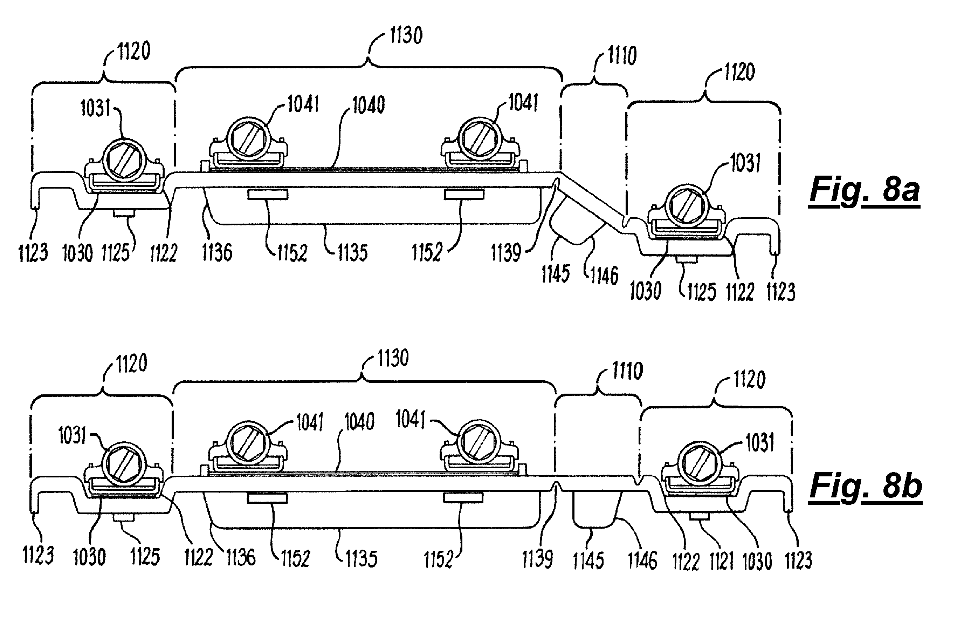

Similarly to the embodiment of figures 1-5, at the boundaries between the central section 1130, compensation section 1110 and contact sections 1120 there are provided circumferential grooves 1139. The grooves 1139 enables the section 1110, 1120 1130 to flex along their boundaries to compensate for a difference in the diameter of the coupled pipes. The flexing is illustrated schematically at figure 8a, whilst figure 8b shows the sleeve 1100 in an unflexed position.

In contrast to the embodiment of figures 1-5, the interior surface of the support sleeve 1100 is provided with axial ribs 1125, 1135, 1145 projecting from its interior surface. The axial ribs 1125, 1135, 1145, provide for improved grip between the support sleeve 1100 and the underlying elastomeric sleeve 1020and relatively even loading of the force applied by the clamping and shear bands 1030, 1040.
the sleeve is provided with separate ribs 1125, 1135, 1145 to enable the sections 1110, 1120, 1130 to flex relative to each other. The ribs 1135, 1145 may have a sloped end 1136, 1146 to compensate for the likely difference in external pipe diameters.

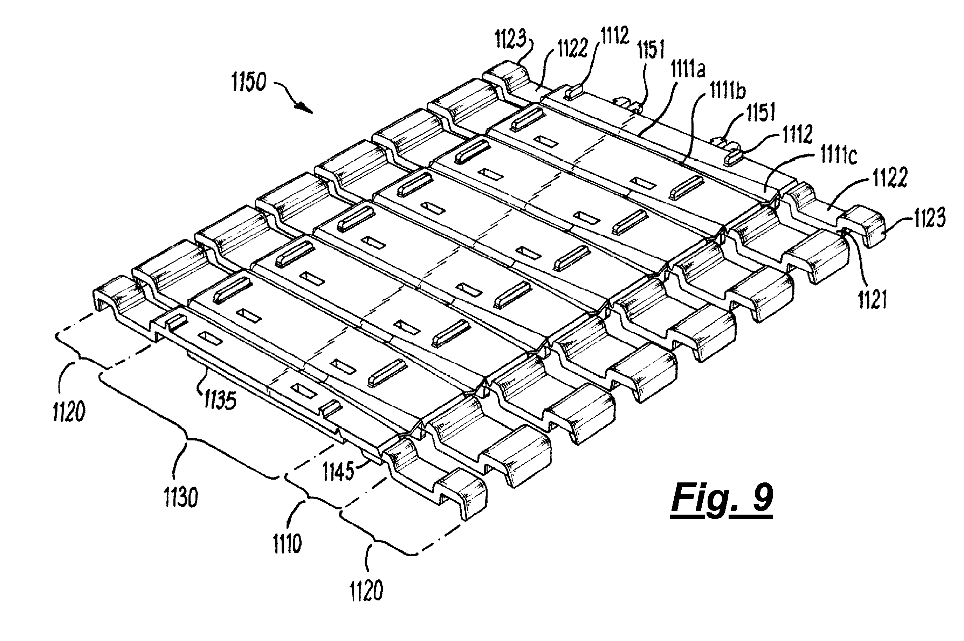

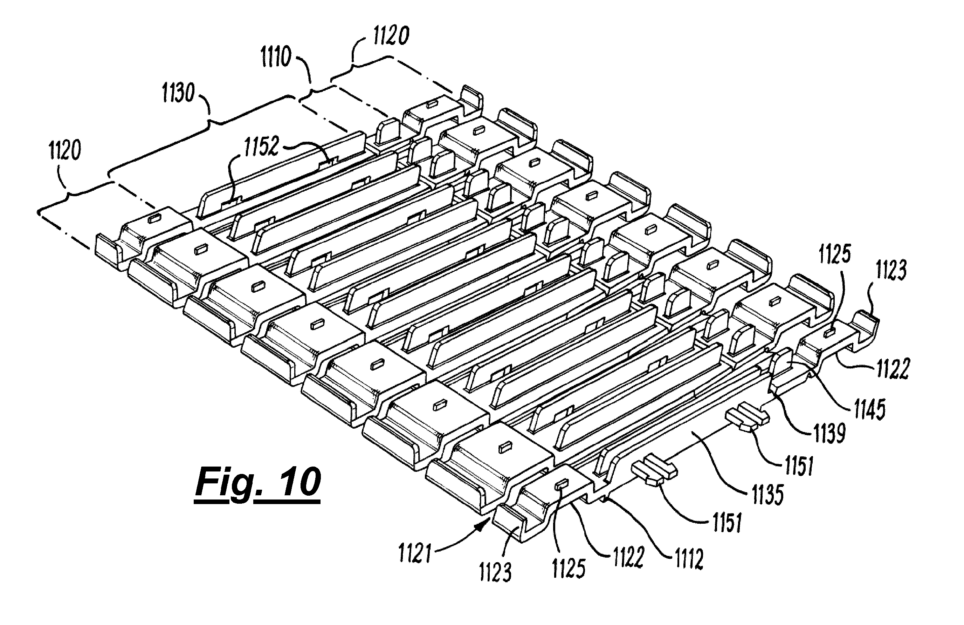

As with the embodiment of figures 1-5, the support sleeve 1100 is formed from a number of ring segments 1150 shown in figures 9 & 10. The ring segments 1150 are connected together via snap fitting elements 1151 which are adapted to be inserted into and form a snap fit with openings 1152 in some of the ribs 1135. If the ribs 1135 are omitted from the design, it is possible for an alternative snap fitting arrangement or for an alternative connection means to be provided, such as thermal welding, adhesive or solvent bonding.

The above embodiments are described by way of example only. Many variations are possible without departing from the scope of the invention as defined in the appended claims.

## Claims

1. A support sleeve for a pipe coupling adapted to connect pipes of different exterior diameters, the support sleeve comprising: a tube having contact sections at either end and a compensation section therebetween wherein the exterior of each contact section is adapted to receive an adjustable clamping band, and wherein the tube is provided with a plurality of aligned pairs of axial slots extending from opposing ends of the tube, and the tube is provided with a plurality of axial webs extending between the blind ends of each pair of aligned slots.

2. A support sleeve as claimed in claim 1 wherein the webs have a U or V shaped cross-sectional profile.

3. A support sleeve as claimed in claim 1 or claim 2 wherein one contact section has a substantially greater axial extent than the other contact section..

4. A support sleeve as claimed in claim 4 wherein the shear bands associated with each contact section are of widths adapted to the axial extent of each contact section..

5. A support sleeve as claimed in any preceding claim wherein the sleeve may be adapted to flex along the boundaries between the contact sections and the compensation section.

6. A support sleeve as claimed in any preceding claim wherein an additional central section is provided between the compensation section and one of the contact sections..

7. A support sleeve as claimed in claim 6 wherein the central section is adapted to retain a shear band.

8. A support sleeve as claimed in any preceding claim wherein the support sleeve is provided with axial ribs projecting from its exterior surface or is provided with axial ribs projecting from its interior surface.

9. A support sleeve as claimed in any preceding claim wherein the support sleeve is formed from one or more ring segments connected together.

10. A support sleeve as claimed in any preceding claim wherein the support sleeve is adapted to flex along the boundary between the compensation section and the central section.

11. A support sleeve as claimed in any preceding claim wherein the contact sections comprise a circumferential channel on the exterior surface of the support sleeve to enable clamping bands to be retained in position.

12. A support sleeve as claimed in any preceding claim wherein the contact sections are provided with griping means at their distal ends.

13. A pipe coupling adapted to connect pipes of different exterior diameters, the pipe coupling comprising an elastomeric sleeve; a support sleeve according to any one of claims 1 to 12 and two or more adjustable clamping bands.

14. A pipe coupling as claimed in claim 13 wherein the support sleeve is fitted with an adjustable shear band.

15. A ring segment suitable for connection together with one or more like ring segments to form a support sleeve according any one of claims 1 to 12, the ring segment comprising: contact sections at either end with a compensation section therebetween wherein the exterior of each contact section is adapted to receive an adjustable clamping band, and wherein the ring segment is provided with a plurality of aligned pairs of axial slots extending from each end of the tube, and the segment is provided with a plurality of axial webs extending between the blind ends of each pair of aligned axial slots.
